# EUROPÄISCHE PATENTSCHRIFT

(11) **EP 4 678 073 B1**
(45) Veröffentlichungstag und Bekanntmachung des Hinweises auf die Patenterteilung: **11.11.2026**
(21) Anmeldenummer: 24187490.8
(22) Anmeldetag: 09.07.2024
(51) Int. Cl.: A47J 31/44, A47J 36/24

(54) **VERFAHREN UND SYSTEM ZUR EFFIZIENTEN ZUBEREITUNG VON FRISCHER, WARMER BABYNAHRUNG**
METHOD AND SYSTEM FOR EFFICIENTLY PREPARING FRESH, WARM BABY FOOD
PROCÉDÉ ET SYSTÈME DE PRÉPARATION EFFICACE D'ALIMENTS FRAIS ET CHAUDS POUR BÉBÉS

(43) Veröffentlichungstag der Anmeldung: 14.01.2026
(73) Patentinhaber: LIINI GmbH, 4532 Feldbrunnen (CH)
(72) Erfinder: ROTH, Mike, 4532 Feldbrunnen (CH)
(74) Vertreter: Bardehle Pagenberg Partnerschaft mbB Patentanwälte Rechtsanwälte

(56) Entgegenhaltungen:
- EP-B1- 3 142 532
- WO-A1-2018/068493
- DE-A1- 10 215 107
- DE-B3- 102019 127 967
- US-A1- 2022 095 831
- US-A1- 2023 271 766
- ANONYMOUS: "Snoozi Nachtflasche mit Flaschenwärmer", 28 May 2024 (2024-05-28), testberichte.de, pages 1 - 4, XP093229231, Retrieved from the Internet <URL:https://www.testberichte.de/p/snoozi-tests/nachtflasche-mit-flaschenwaermer-testbericht.html#produkt-meinungen> [retrieved on 20241128]

## Beschreibung

### Technisches Gebiet

Die vorliegende Erfindung bezieht sich auf ein System und ein Verfahren zur Zubereitung und Erwärmung von Babynahrung. Ebenfalls bezieht sich die vorliegende Erfindung auf einen Flaschenaufsatz zur Zubereitung von warmer Babynahrung in einer Babyflasche sowie auf ein Verfahren zum Betrieb einer Wärmestation zum Warmhalten und / oder Erwärmen einer mit Flüssigkeit gefüllten Babyflasche.

### Technischer Hintergrund

Bei der Zubereitung von Babynahrung ist es üblich, dass Eltern und Betreuer Babynahrungspulver manuell in eine Babyflasche geben und anschließend mit Wasser mischen. Dieser Prozess kann zeitaufwendig und unpraktisch sein, insbesondere wenn eine schnelle Zubereitung erforderlich ist, wie beispielsweise mitten in der Nacht. Bekannte Systeme umfassen typischerweise separate Behälter für Babynahrungspulver und Wasser, die manuell gemischt werden müssen. Diese Systeme erfordern oft mehrere Schritte und können zu einer ungleichmäßigen Mischung führen, was die Qualität der Babynahrung beeinträchtigen kann.

Aus dem Stand der Technik sind verschiedene Ansätze zur Erwärmung von Babyflaschen, darunter Mikrowellen, Wasserbäder und elektrische Flaschenwärmer bekannt. Beispielsweise ist in der DE 10 2019 127967 B3 eine Babyflasche zur Zubereitung von Babymilch beschrieben mit einem Pulverdepot und einer festintegrierten Heizung. Des Weiteren ist aus EP 3 142 532 B1 eine Erwärmungsvorrichtung zum Aufwärmen von Lebensmitteln in einem Behälter, insbesondere von Milch in einer Babyflasche, bekannt. Bei niedriger Temperatur des Flascheninhalts wird ein Fluid, das sich in einer die Babyflasche vollständig umschließenden Kammer befindet, durch ein Heizelement erwärmt. Die Vorrichtung ist insbesondere mit einem Kontrollverfahren ausgestattet, das ein Temperaturprofil des Fluids nutzt, um dessen Erwärmung zu steuern. Aus WO 2018/068493 A1 ist ferner ein multifunktionales System bestehend aus einer Babyflasche und einer elektrischen Heizmanschette bekannt, welches Milchpulver und Wasser speichern sowie isolieren und heizen kann. Zur Zubereitung des Milchpulvers wird hierbei eine Auslassöffnung betätigt, um das Milchpulver aus einer Kammer in die Babyflasche zu füllen. Zwischen der Kammer und der Babyfalsche befindet sich eine Auslassöffnung, welche durch Drehen gesteuert werden kann, und sowohl der geöffnete als auch der geschlossene Zustand kann durch einen Verriegelungsstift gesichert werden.

### Zusammenfassung

Der zuvor beschriebene Stand der Technik ist jedoch durch verschiedene Nachteile gekennzeichnet: Beispielsweise ist der Schließmechanismus des Milchdepots aus DE 10 2019 127967 B3 nicht reversibel und das Verschlussteil fällt beim Öffnen des Milchdepots in die Flasche. Dies erschwert die Vorbereitung des Milchdepots und der Babyflasche für die nächste Fütterung. Ferner führt die feste Integrierung der Heizvorrichtung und des Milchdepots in die Babyflasche dazu, dass die Babyflasche an zusätzlichem Volumen und Gewicht erhält. Dies macht sie unhandlicher und erschwert ihre Benutzung bei der Fütterung des Babys. Auch macht es sie wesentlich teurer und anfälliger für Produktversagen. Wird die Babyflasche beispielsweise durch Herunterfallen beschädigt, muss sie meist vollständig ersetzt werden. Die Erwärmungsvorrichtung aus EP 3 142 532 B1 benötigt zum Erstellen des beschriebenen Temperaturprofils nicht nur eine aufwendige Software, sondern auch eine komplexe Sensorik, was sehr kostspielig sein kann und das Produkt verkompliziert und fehleranfällig macht. Die aus WO 2018/068493 A1 zitierte Auslassöffnung ist nicht zwangsläufig wasserdicht, was insbesondere bei Erwärmen des Flascheninhalts, wobei natürlicherweise Wasserdampf entsteht, zu Problemen führen kann. Die Notwendigkeit einer Dichtungsplatte und eines Verriegelungsstifts führen außerdem zu hohen Herstellungskosten.
Solche und ähnliche Nachteile sind zumindest teilweise durch das System nach Anspruch 1 und das Verfahren nach Anspruch 10 behoben. Einige Varianten und Implementierungen der hier offenbarten grundlegenden Erfindungskonzepte sind Gegenstand der abhängigen Ansprüche und im Folgenden ausführlicher beschrieben. Das Computerprogramm nach Anspruch 13 ist ebenfalls Teil der vorliegenden Erfindung.

Der hierin offenbarte Flaschenaufsatz erlaubt es u.a. beschädigte Babyflaschen und / oder beschädigte Babyflaschen in einfacher Weise auszutauschen, ohne den Aufbewahrungsraum für die Babynahrungszutat und / oder den Schließmechanismus ebenfalls auszutauschen zu müssen. Ferner ist der hier beschriebene Schließmechanismus reversibel und einfach zu bedienen. Ein weiterer Vorteil für den Anwender besteht darin, dass er / sie den Flaschenaufsatz mit bereits vorhandenen Babyflaschen und Babysaugern verwenden kann, was eine anfallende Müllmenge und Kosten reduziert. Auch kann der Flaschenaufsatz mit Babyflaschen unterschiedlicher Kapazität und Babysaugern mit unterschiedlicher Durchflussrate verwendet werden, die typischerweise im Laufe des Wachstums des Kleinkinds durch größere Flaschen und Babysauger ausgetauscht werden.

Die hierin offenbarte Wärmestation zeichnet sich dadurch aus, dass Sie einen geringen Raumbedarf hat und so z.B. auch auf kleinen Nachttischen betrieben werden kann. Ferner kann die Wärmestation mit unterschiedlichen Flaschentypen, Füllmengen und / oder Nahrungstypen betrieben werden, wobei eine konsistente Qualität der zubereiteten Babynahrung sichergestellt wird. Ferner ist der Wartungs- und Reinigungsaufwand minimal, da die Wärmestation keine beweglichen Teile hat, und die Erwärmung der Babyflasche lediglich über Wärmeleitung zwischen einer Heizplatte und einem Bodenteil der Babyflasche erfolgt.

Das hierin beschriebene System aus Flaschenaufsatz und Wärmestation führt zu weiteren entscheidenden Vorteilen für die Eltern und das Baby. Beispielsweise ist die Heizvorrichtung physisch von der Babyflasche getrennt. Die Babyflasche kann nach Bedarf mit der Heizvorrichtung durch Daraufstellen mit der Oberfläche der Wärmestation in Kontakt gebracht werden. Vor dem Schlafengehen kann die Babyflasche mit Wasser in der gewünschten Trinkmenge des Babys befüllt werden. Anschließend wird der Flaschenaufsatz auf die Babyflasche aufgeschraubt. In der geschlossenen Position des Aufsatzes wird nun die Babyflasche durch das Schließelement, z.B. eine verdrehbare Verschlussiris aus Silikon, wasserdicht verschlossen. Im geschlossenen Bereich des Aufsatzes kann nun eine Zutat wie Milchpulver von oben in der gewünschten Menge eingefüllt werden. Das Fassungsvolumen des Aufsatzes ist dabei so eingerichtet, dass auch Babyflaschen mit großer Kapazität mit einer ausreichenden Menge der Zutat befüllt werden können, um die Babynahrung auch in größeren Mengen herzustellen. Dabei wurden zum Beispiel unterschiedliche Dichten von Milchpulvern verschiedener Hersteller berücksichtigt.

Nachdem der Aufsatz mit der gewünschten Zutat befüllt wurde, wird der Babysauger auf den oberen Teil des Flaschenaufsatzes auslaufsicher aufgeschraubt. Die Babyflasche ist bereit und kann nun auf die Wärmestation gestellt werden um sie auf die gewünschte Zubereitungstemperatur zu erwärmen und / oder diese konstant zu halten. Wenn das Baby in der Nacht hungrig ist, kann die warme Babynahrung innerhalb von wenigen Sekunden von den Eltern zubereitet werden. Weiterer vorteilhafte Aspekte der hier beschriebenen Vorrichtungen, Systeme, Verfahren und Computerprogramme werden im Folgenden mit Bezugnahme auf die Zeichnungen beispielhaft dargestellt.

### Kurzbeschreibung der Zeichnungen

Die vorliegende Offenbarung wird unter Bezugnahme auf die Zeichnungen, in denen sie beispielhaft dargestellt ist, näher erläutert:
**Fig. 1** zeigt einen beispielhaften Flaschenaufsatzes (100) zur Zubereitung von warmer Babynahrung in einer Babyflasche, mit einem unteren Teil (110) mit einem ersten Gewinde (115), einem mittleren Teil (120) zur Aufbewahrung einer Babynahrungszutat und einem oberen Teil (130) mit einem zweiten Gewinde (135).
**Fig. 2** zeigt einen weiteren beispielhaften Flaschenaufsatzes (100) zur Zubereitung von warmer Babynahrung in einer Babyflasche, mit einem unteren Teil (110) mit einem ersten Gewinde (115), einem mittleren Teil (120) zur Aufbewahrung einer Babynahrungszutat und einem oberen Teil (130) mit einem zweiten Gewinde (135).
**Fig. 3** zeigt einen weiteren beispielhaften Flaschenaufsatz (100) zur Zubereitung von warmer Babynahrung in einer Babyflasche
**Fig. 4** zeigt einen weiteren beispielhaften Flaschenaufsatzes (100) zur Zubereitung von warmer Babynahrung in einer Babyflasche. Hier ist auch eine mögliche Implementierung des Verschlusselements (125) dargestellt.
**Fig. 5** zeigt ein Funktionsblockdiagramm einer beispielhaften Wärmestation (210) mit einem Heizelement (215), einer Heizplatte (212), einem Temperatursensor (230), einer Datenverarbeitungsschaltung (220), einer Nutzerschnittstelle (225), einem Flaschensensor (232) und einem Datenspeicher (240).
**Fig. 6** zeigt eine beispielhafte Ausführungsform einer Wärmestation (210)
**Fig. 7** zeigt einen Regelkreis zur Ansteuerung des Heizelementes (215) der Wärmestation (210) basierend auf dem Sensorsignal des Temperatursensor (230).
**Fig. 8** zeigt ein beispielhaftes System (800) zur Zubereitung von warmer Babynahrung in einer Babyflasche (805) umfassend eine Flaschenaufsatz (100) und eine Wärmestation (210).
**Fig. 9** zeigt ein Flussdiagramm eines Verfahrens (900) zum Betrieb einer Wärmestation (210) zum Warmhalten und / oder Erwärmen einer mit Flüssigkeit gefüllten Babyflasche, umfassend: Erhaltens (910) von Eingabeparametern, Erhalten (920) einer Zubereitungstemperatur für die Babynahrung, und Ansteuern (930) eines Heizelements der Wärmestation.

### Detaillierte Beschreibung beispielhafter Ausführungsformen

Im Folgenden werden einige Ausführungsbeispiele der Vorrichtungen, Systeme und Verfahren der vorliegenden Erfindung beschrieben. Hierbei werden verschiedenen Merkmalskombinationen mit Bezugnahme auf einige beispielhafte Ausführungsformen und Zeichnungen beschrieben. Die beanspruchten Vorrichtungen, Systeme und Verfahren sind jedoch nicht auf solche Ausführungsformen beschränkt. Vielmehr ist zu verstehen, dass auch andere Merkmalskombinationen unter den Schutzbereich der Erfindung fallen können. Mit anderen Worten müssen nicht alle Merkmale der beschriebenen Ausführungsformen vorhanden sein, um die vorliegende Erfindung zu realisieren. Des Weiteren könne Ausführungsformen durch Kombinieren gewisser Merkmale einer Ausführungsform mit einem oder mehreren Merkmalen einer anderen Ausführungsform modifiziert werden - soweit technisch sinnvoll - ohne von der Offenbarung und dem Schutzumfang der vorliegenden Erfindung abzuweichen. Die Erfindung ist durch die Patentansprüche definiert. Ferner ist der Begriff "im Wesentlichen" im Rahmen der vorliegenden Erfindung als "innerhalb typischer Design-, Konstruktions-, Fertigungs- und / oder Messtoleranzen" aufzufassen.

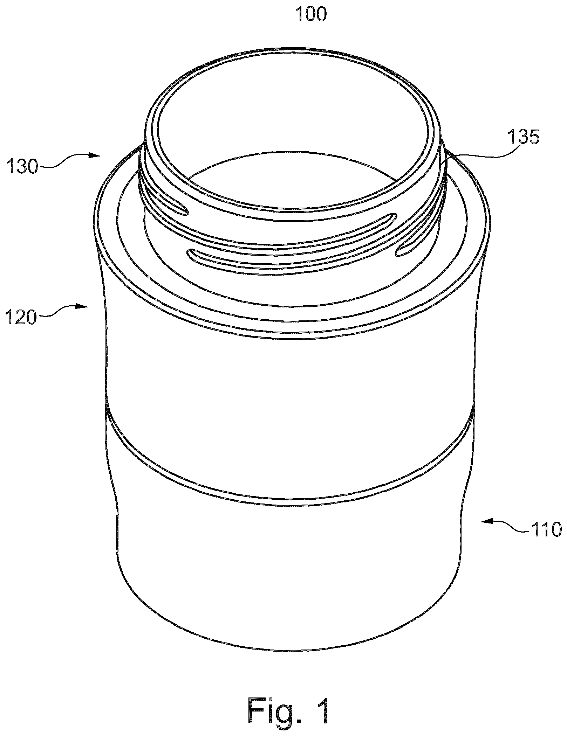

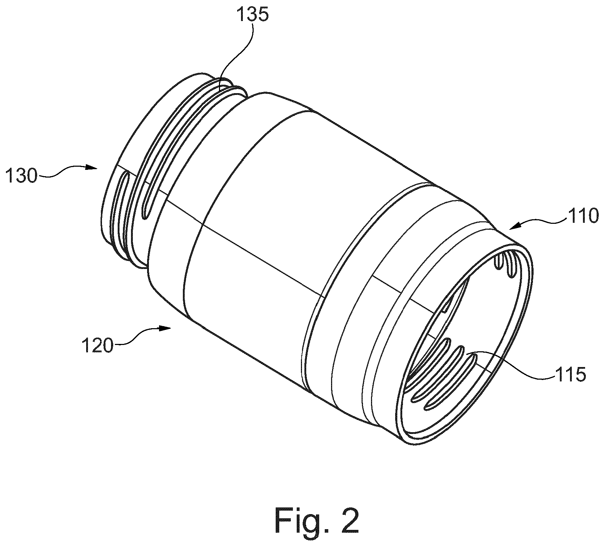

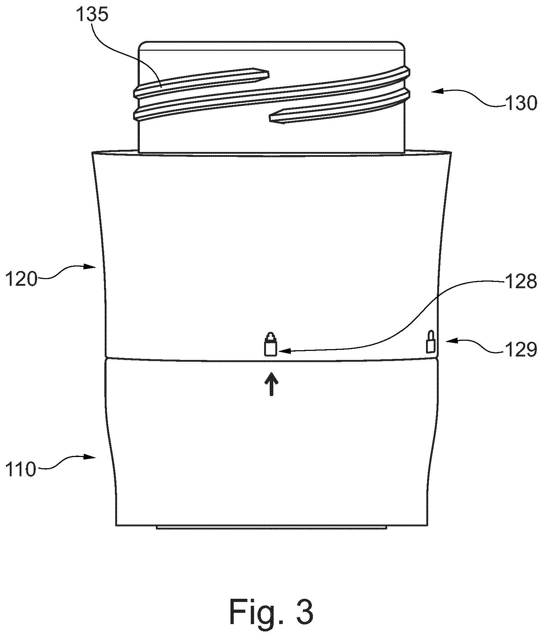

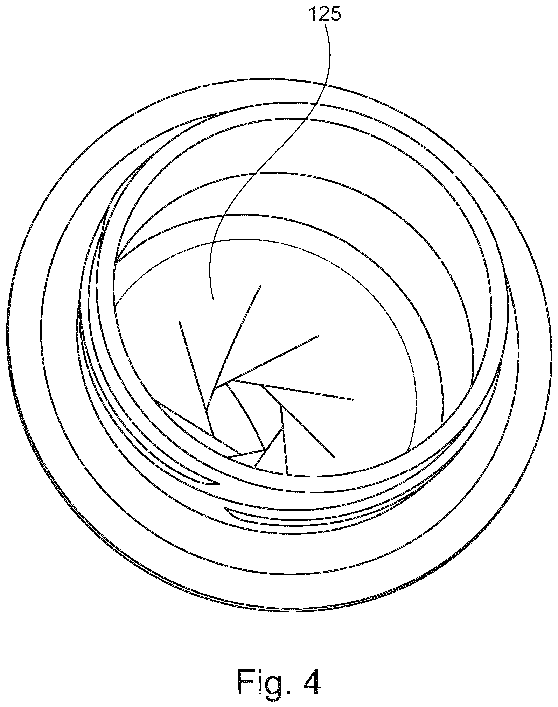

**Fig. 1** zeigt einen Flaschenaufsatz (100) zur Zubereitung von warmer Babynahrung in einer Babyflasche. Der Flaschenaufsatz (100) umfasst einen unteren Teil (110) mit einem ersten Gewinde (vgl. Fig. 2) zum Aufschrauben des Flaschenaufsatzes auf die Babyflasche. Ein mittlerer Teil (120) dient zur Aufbewahrung einer Babynahrungszutat und ist mit einem Verschlusselement (vgl. Fig. 3 und Fig. 4) ausgestattet, mit dem die Babynahrungszutat in die Babyflasche zur Zubereitung der Babynahrung eingelassen werden kann. Der obere Teil (130) weist ein zweites Gewinde (135) zum Aufschrauben eines Babysaugers auf den Flaschenaufsatz auf. Bei geöffnetem Verschlusselement kann die zubereitete Babynahrung von der Babyflasche durch den Flaschenaufsatz (100) in den Babysauger fließen. In einer möglichen Ausführungsform umfasst das erste Gewinde ein Innengewinde und das zweite Gewinde (135) ein Außengewinde. Das Verschlusselement kann eine Verschlussiris umfassen, die vorzugsweise im Wesentlichen aus Silikon gefertigt ist. Das Verschlusselement kann beispielsweise über eine Drehung des mittleren Teils (120) gegenüber dem unteren Teil (110) des Flaschenaufsatzes (100) betätigbar (vgl. Fig. 3) sein.

**Fig. 2** zeigt einen weiteren beispielhaften Flaschenaufsatz (100) zur Zubereitung von warmer Babynahrung in einer Babyflasche. Der Flaschenaufsatz (100) umfasst einen unteren Teil (110) mit einem ersten Gewinde (115) zum Aufschrauben des Flaschenaufsatzes auf die Babyflasche. Ein mittlerer Teil (120) dient zur Aufbewahrung einer Babynahrungszutat und ist mit einem Verschlusselement (vgl. Fig. 4) ausgestattet, mit dem die Babynahrungszutat in die Babyflasche zur Zubereitung der Babynahrung eingelassen werden kann. Der obere Teil (130) weist ein zweites Gewinde (135) zum Aufschrauben eines Babysaugers auf den Flaschenaufsatz auf. Bei geöffnetem Verschlusselement kann die zubereitete Babynahrung von der Babyflasche durch den Flaschenaufsatz (100) in den Babysauger fließen. In einer möglichen Ausführungsform umfasst das erste Gewinde (115) ein Innengewinde und das zweite Gewinde (135) ein Außengewinde. Das Verschlusselement kann eine Verschlussiris umfassen, die vorzugsweise im Wesentlichen aus Silikon gefertigt ist. Das Verschlusselement kann über eine Drehung des mittleren Teils (120) gegenüber dem unteren Teil (110) des Flaschenaufsatzes (100) betätigbar sein.

**Fig. 3** zeigt einen weiteren Flaschenaufsatz zur Zubereitung von warmer Babynahrung in einer Babyflasche. Der Flaschenaufsatz umfasst einen unteren Teil (110) mit einem ersten Gewinde zum Aufschrauben des Flaschenaufsatzes auf die Babyflasche. Ein mittlerer Teil (120) dient zur Aufbewahrung einer Babynahrungszutat und ist mit einem Verschlusselement ausgestattet, mit dem die Babynahrungszutat in die Babyflasche zur Zubereitung der Babynahrung eingelassen werden kann. Der obere Teil (130) weist ein zweites Gewinde (135) zum Aufschrauben eines Babysaugers auf den Flaschenaufsatz auf. Bei geöffnetem Verschlusselement kann die zubereitete Babynahrung von der Babyflasche durch den Flaschenaufsatz (100) in den Babysauger fließen. In einer möglichen Ausführungsform umfasst das erste Gewinde ein Innengewinde und das zweite Gewinde (135) ein Außengewinde. Das Verschlusselement kann eine Verschlussiris umfassen, die vorzugsweise im Wesentlichen aus Silikon gefertigt ist. Wie in **Fig. 3** dargestellt, kann das Verschlusselement über eine Drehung des mittleren Teils (120) gegenüber dem unteren Teil (110) des Flaschenaufsatzes betätigbar sein.

Insbesondere ist in **Fig. 3** dargestellt, dass der mittlere Teil (120) gegenüber dem unteren Teil (110) verdreht werden kann, und zwar von einer Verschlussposition (129) zu einer geöffneten Position (128). Durch diese Ausgestaltung ist es für die Eltern sehr einfach, nachts das Verschlusselement zu betätigen und dadurch die Babynahrung in die Babyflasche einzufüllen. Anschließend kann das Verschlusselement wieder verschlossen werden, um die Flasche zu schütteln und die Babynahrung zuzubereiten. Wenn das Verschlusselement in der Verschlussposition ist, kann die Babynahrungszutat von oben durch den oberen Teil (130) eingefüllt werden und anschließend ein üblicher Babysauger aufgeschraubt werden kann. Danach kann der Flaschenaufsatz mit dem unteren Teil (110) auf eine gängige mit Flüssigkeit gefüllte Babyflasche aufgeschraubt werden. Die Babyflasche ist dann fertig präpariert, kann erwärmt werden und in der Nacht zur schnellen und einfachen Zubereitung von frischer Babynahrung verwendet werden.

**Fig. 4** zeigt die Ausführungsform von **Fig. 3** in einer schrägen Draufsicht von oben. In dieser schrägen Draufsicht ist das Verschlusselement (125) erkennbar, welches in dieser exemplarischen Ausführungsform als Verschlussiris aus Silikon implementiert ist, die in **Fig. 4** in einer halb geschlossenen Position dargestellt ist. Das Verschlusselement (125) kann durch Verdrehen des mittleren Teils (120) in Relation zum unteren Teil (110) reversibel geschlossen und geöffnet werden und leicht gereinigt werden.

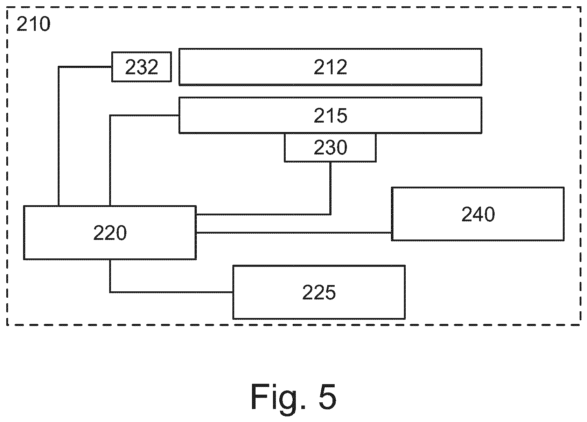

**Fig. 5** zeigt ein Blockschaltdiagramm einer exemplarischen Ausführungsform einer Wärmestation (210), mit der mit Flüssigkeit gefüllte Babyflaschen kontrolliert aufgeheizt und über einen längeren Zeitraum bei wesentlich konstanter Temperatur gehalten werden können. Die dargestellte exemplarische Wärmestation (210) umfasst ein Heizelement (215), eine Heizplatte (212), einen Temperatursensor (230), eine Datenverarbeitungsschaltung (220), eine Nutzerschnittstelle (225), einen Flaschensensor (232) und einen Datenspeicher (240).

Das Heizelement (215) ist dazu eingerichtet, eine auf der Heizplatte (212) der Wärmestation (210) platzierte und mit Flüssigkeit gefüllte Babyflasche durch Erwärmen eines Bodenteils der Babyflasche zu erwärmen und / oder warmzuhalten. Der Temperatursensor (230) ist dazu eingerichtet, eine Temperatur der Babyflasche anzuzeigen und diese Information an die Datenverarbeitungsschaltung (220) zu liefern. Da der Temperatursensor in der dargestellten Ausführungsform die Temperatur des Heizelements (215) oder der Heizplatte (212) misst, zeigt der Temperatursensor (230) die Temperatur der Babyflasche lediglich mittelbar an, sobald sich die Babyflasche auf der Wärmeplatte befindet. In anderen Ausführungsformen kann der Temperatursensor auch in die Wärmeplatte 212 (z.B. in einer Aussparung derselben) integriert sein, um eine direktere Messung der Temperatur der gefüllten Babyflasche zu gewährleisten. Das Anzeigen einer Temperatur der Babyflasche - wie hierin verwendet - umfasst daher auch das mittelbare bzw. indirekte Anzeigen der Temperatur der Babyflasche, z.B. über das Messen einer Temperatur eines Heizelements, das mit der Babyflasche in thermischen Kontakt steht.

Die Datenverarbeitungsschaltung (220) ist dazu eingerichtet, eine Heizleistung des Heizelements (215) basierend auf einem Aufheiz- und Wärmeverlustverhalten der mit einer Flüssigkeit gefüllten Babyflasche und einer, vorzugsweise einstellbaren, Zubereitungstemperatur für die Babynahrung zu bestimmen. Dies ermöglicht eine präzise Steuerung der Temperatur, um sicherzustellen, dass die Babynahrung stets die optimale Temperatur hat, und zwar selbst dann, wenn die Temperatur der Babyflasche nur indirekt gemessen werden kann, z.B. über einen Temperatursensor, der sich in der Heizplatte 212 befindet oder gar nur die Temperatur des Heizelements (215) misst.

Die Nutzerschnittstelle (225) ist dazu eingerichtet, es dem Benutzer zu ermöglichen, die Materialeigenschaft der Babyflasche einzustellen, optional verschiedene weitere Parameter wie die Flüssigkeitsmenge, die Nahrungspulvermenge und/oder die Zubereitungstemperatur. Diese Eingabeparameter werden dann von der Datenverarbeitungsschaltung (220) verwendet, um die Heizleistung des Heizelements (215) zu bestimmen. Dies kann insbesondere unter Verwendung eines thermodynamischen Modells des Aufheiz- und Wärmeverlustverhaltens der Babyflasche oder unter Verwendung einer Vielzahl von vorkalibrierten Heizwerten oder Heizkurven für eine entsprechende Vielzahl von Kombinationen der einstellbaren Werte erfolgen. In einer spezifischen Ausführungsform kann auch lediglich das Flaschenmaterial (d.h., Glas oder Plastik), eine Trinkmenge des Babys (z.B.: 80ml, 120ml, 150ml, 180ml, 240ml) sowie eine gewünschte Trinktemperatur des Babys (37°C / 40°C / 45°C) eingestellt werden. Das Einstellen der Nahrungspulvermenge kann hier entbehrlich sein, da diese sich anhand der Herstellerangaben des Nahrungspulvers und der entsprechenden, durch den Kunden angegebenen Trinkmenge ergeben kann. Dadurch kann die Komplexität der Datenverarbeitungsschaltung reduzierter werden.

Ein optionaler Flaschensensor (232) ist dazu eingerichtet, zu erkennen, ob sich eine Babyflasche auf der Heizplatte (212) befindet. Dieser kann beispielsweise über einen Klick-Taster im Boden des Geräts implementiert sein. Wenn der Flaschensensor (232) anzeigt, dass sich keine Babyflasche auf der Heizplatte (212) befindet, ist die Datenverarbeitungsschaltung (220) dazu eingerichtet, die Regelung der Heizleistung zu unterbrechen. Dies verhindert eine unnötige Energieverschwendung und erhöht die Sicherheit der Wärmestation (210). Ein Datenspeicher (240) kann dazu eingerichtet sein, eine Vielzahl von vorkalibrierten Heizleistungen oder Heizkurven bzw. der zugehörigen Regelungssollwerte zu speichern. Diese vorkalibrierten Werte ermöglichen eine schnelle und einfache Anpassung der Heizleistung basierend auf den erhaltenen Eingabeparametern und der erhaltenen Zubereitungstemperatur.

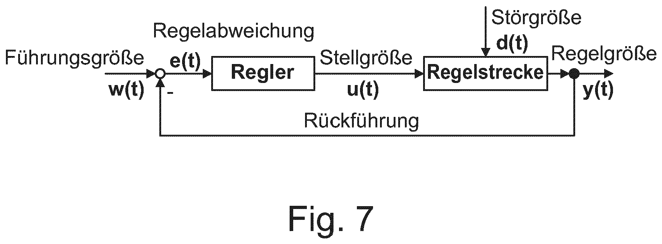

Die Nutzerschnittstelle (225) kann ferner dazu eingerichtet sein, sich selbst zu inaktivieren, wenn sie einen gewissen Zeitraum nicht verwendet wird, sodass kein Licht mehr vorhanden ist, was den Schlaf des Babys und der Eltern verbessert. Um eine bessere Bedienbarkeit während der Nacht zu gewährleisten, kann die Nutzerschnittstelle aber auch aktiv blieben. Hier kann eine Inaktivierung dann erfolgen, falls keine Babyflasche auf der Wärmestation platziert ist. Zudem kann die Nutzerschnittstelle (225) gesperrt werden, beispielsweise durch zweisekundiges Drücken, sodass nur die Eltern die Wärmestation (210) betätigen können und nicht das Kind aus Versehen die Wärmestation (210) aktiviert. Dies verbessert die Sicherheit des gesamten Systems erheblich. Eine mögliche Art der Temperaturregelung ist nachstehend mit Bezugnahme auf **Fig. 7** beschrieben. Technische Vorteile der beschriebenen Wärmestation (210) umfassen eine präzise Temperaturregelung, die Anpassungsfähigkeit an verschiedene Babyflaschentypen, -größen, und / oder Babynahrungszubereitungen sowie eine erhöhte Sicherheit und Energieeffizienz durch den Einsatz des Flaschensensors (232). Die Möglichkeit, verschiedene Parameter über die Nutzerschnittstelle (225) einzustellen, bietet dem Benutzer eine hohe Flexibilität und Benutzerfreundlichkeit. Ferner erlaubt es die Verwendung einer Heizplatte in der Kombination mit der Berücksichtigung des Aufheiz- und Wärmeverlustverhaltens der Babyflasche kompakte Wärmestationen zu konstruieren, die selbst auf kleinen Nachttischen betrieben werden können.

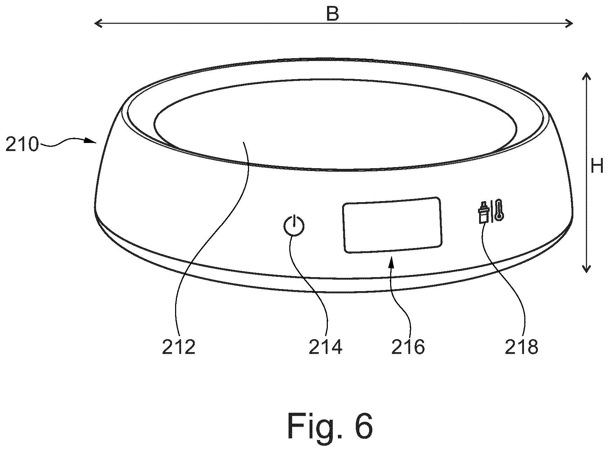

**Fig. 6** zeigt eine weitere Ausführungsform einer Wärmestation (210), wie sie beispielhaft im Blockschaltdiagramm von **Fig. 5** beschrieben ist. Es handelt sich hierbei um eine Draufsicht auf eine Wärmestation (210), die in einem Gehäuse angeordnet ist. Die Wärmestation (210) umfasst ein Display (216) und mehrere Knöpfe (214, 182), die zur Bedienung der Wärmestation (210) dienen.

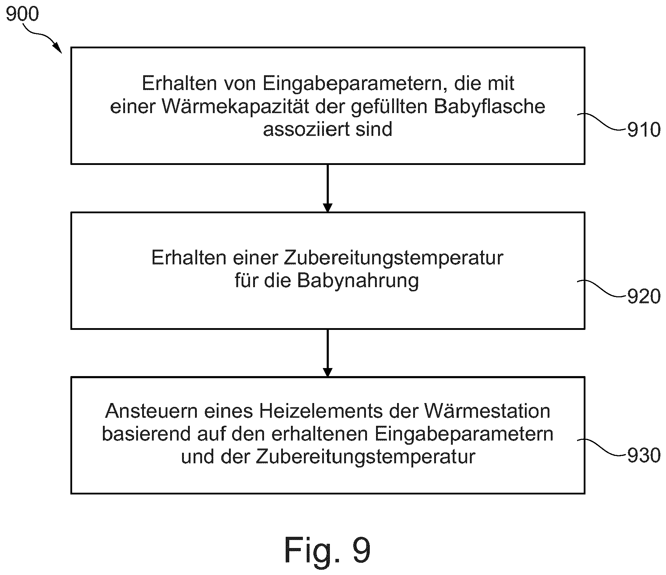

Die Wärmestation (210) ist dazu eingerichtet, mit unterschiedlichen Babyflaschen betrieben zu werden, indem diese einfach auf die Heizplatte (212) gestellt werden. Die Wärmeleitung zum Aufheizen und Warmhalten der Babyflasche erfolgt über einen Wärmekontakt zwischen der Heizplatte (212) und dem Bodenteil der Babyflasche. Dies bedeutet, dass die Wärmestation (210) für unterschiedlichste Typen und Größen von Babyflaschen verwendbar ist. Die Heizregelung der Wärmestation (210) ist, wie bereits oben erwähnt und wie genauer beim Verfahren von **Fig. 9** beschrieben, so ausgestaltet bzw. vorkalibriert, dass die Wärmestation (210) auch Babyflaschen mit unterschiedlichen Materialien, unterschiedlichen Größen, unterschiedlichen Füllmengen und unterschiedlichen Trinktemperaturen erwärmen und warmhalten kann. Es gibt verschiedene Temperaturen, die eingestellt werden können, je nachdem, bei welcher Temperatur die Eltern gerne die Babynahrung zubereiten möchten. Die dafür notwendigen Parameter können über die Nutzerschnittstelle eingestellt werden, die in der dargestellten Ausführungsform einen Display 216 und zwei Eingabetaster bzw. Knöpfe (214) und (228) umfasst. Falls abgekochtes, heißes Wasser in die Babyflasche gegeben wird hat die Wärmestation vor allem die Aufgabe die Babyflasche über einen längeren Zeitraum bei der eingestellten Temperatur zu halten. Für eine einfache Implementierung der vorliegenden Erfindung ist es daher ausreichend, wenn die Wärmestation (210) lediglich diese Fähigkeit hat; das Aufheizen von Babyflaschen von Raumtemperatur oder weniger zur Trinktemperatur ist eine vorteilhafte Eigenschaft einiger Ausführungsformen.

Die Wärmestation (210) hat sehr geringe Abmessungen und kann daher sehr gut auf kleinen Nachttischen platziert werden. Dies stellt einen signifikanten Vorteil dar, da sie auch in beengten räumlichen Verhältnissen, wie beispielsweise im Schlafzimmer der Eltern, verwendet werden kann. Die Wärmestation (210) ist ferner dazu eingerichtet, sich selbst zu inaktivieren, wenn sie einen gewissen Zeitraum nicht verwendet wird, sodass kein Licht mehr vorhanden ist, was den Schlaf des Babys und der Eltern verbessert. Um eine bessere Bedienbarkeit während der Nacht zu gewährleisten, kann die Nutzerschnittstelle aber auch aktiv blieben. Hier kann eine Inaktivierung dann erfolgen, falls keine Babyflasche auf der Wärmestation platziert ist. Zudem kann die Nutzerschnittstelle (225) gesperrt werden, beispielsweise durch zweisekundiges Drücken eines der Inputknöpfe, sodass nur die Eltern die Wärmestation (210) betätigen können und nicht das Kind aus Versehen die Wärmestation (210) aktiviert. Dies verbessert die Sicherheit des gesamten Systems erheblich. Optional ist es auch möglich, bereits zubereitete Babynahrung oder auch natürliche Milch mit dieser Wärmestation (210) warm zu halten oder zu erwärmen. Das bedeutet, dass diese Wärmestation (210) wesentlich flexibler einsetzbar ist und vom Neugeborenenalter bis zum Kleinkindalter kontinuierlich verwendet werden kann. Sie kann auf die Bedürfnisse des Kindes angepasst werden und stellt daher einen signifikanten Vorteil gegenüber den aus dem Stand der Technik bekannten Systemen und Vorrichtungen bzw. Verfahren dar. Insbesondere kann ein Durchmesser oder eine Breite B der Wärmestation (219) kleiner ist als 100 mm und eine Höhe H der Wärmestation kann dadurch kleiner sein als 30mm.

**Fig. 7** zeigt ein Schaubild eines allgemeinen Temperaturregelkreises. Dieser Regelkreis kann exemplarisch für die Temperaturregelung der Heizplatte (212) der Wärmestation (210) verwendet werden. Der Regelkreis umfasst mehrere wesentliche Komponenten, darunter den Sollwert (Führungsgröße), einen Regler, eine Regelstrecke und den Temperatursensor (230) für die Rückführung des Istwerts.

Der Sollwert bzw. die Führungsgröße wird durch die Eingabeparameter vorgegeben, die über die Nutzerschnittstelle (225) eingegeben werden. Diese Parameter umfassen Informationen über die Babyflasche, wie den Füllstand, das Material der Flasche und die gewünschte Zubereitungstemperatur. Zum Beispiel kann der Sollwert 45°C betragen, wenn dies die gewünschte Trinktemperatur für die Babynahrung ist. Basierend auf diesen Eingabeparametern wird der Sollwert für die Temperatur der Heizplatte (212) festgelegt. Der Regler vergleicht kontinuierlich den Sollwert mit dem Istwert, der vom Temperatursensor (230) gemessen wird. Der Temperatursensor (230) ist dazu eingerichtet, z.B. die aktuelle Temperatur der Heizplatte (212) zu messen und diese Information an den Regler zu übermitteln. Zum Beispiel kann der Temperatursensor (230) eine aktuelle Temperatur von 35°C messen und diese an den Regler übermitteln. Der Regler berechnet dann die Abweichung zwischen Soll- und Istwert und passt die Heizleistung des Heizelements (215) entsprechend an, um die gewünschte Temperatur zu erreichen und zu halten. Wenn der Istwert 35°C beträgt, erkennt der Regler eine Abweichung und erhöht die mittlere Heizleistung des Heizelements (215) z.B. über Pulsbreitenmodulation, um die Temperatur auf 37°C zu bringen.

Durch die Definition verschiedener Sollwerte, die nacheinander angefahren werden, lassen sich Heizkurven erstellen. Diese Heizkurven ermöglichen es, Babyflaschen, die sich bei Raumtemperatur oder noch kälteren Temperaturen befinden, effizient und sicher auf die gewünschte Trinktemperatur zu bringen und diese Temperatur dann konstant zu halten. Dies ist besonders wichtig, um sicherzustellen, dass die Babynahrung stets die optimale Temperatur hat, unabhängig von äußeren Einflüssen. Der Regelkreis stellt sicher, dass auch bei Änderungen der Außentemperatur die Temperatur der Heizplatte (212) konstant bleibt. Durch die Kalibrierung bzw. das verwendete thermodynamische Modell für die Aufheiz- und Wärmeabstrahlcharakteristik der Babyflasche wird gewährleistet, dass die Babyflasche immer auf der gewünschten Temperatur gehalten wird. Dies erhöht die Zuverlässigkeit und Effizienz der Wärmestation (210) erheblich und stellt sicher, dass die Babynahrung stets die richtige Temperatur hat.

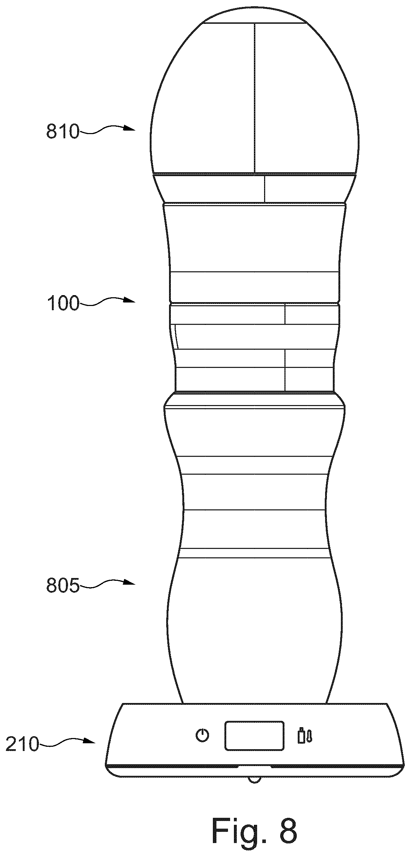

**Fig. 8** zeigt ein System (200) zur Zubereitung von warmer Babynahrung in Babyflaschen umfassend einen Flaschenaufsatz (100) wie vorstehend beschrieben und eine Wärmestation (210) - wie vorstehend beschrieben, die dazu eingerichtet ist, einer darauf stehenden Babyflasche (805) durch Wärmeleitung über ein Bodenteil der Babyflasche Wärme zuführen, wenn die Babyflasche auf einer Heizplatte (212) der Wärmestation platziert ist. Die Wärmestation umfasst ein Heizelement (215) und eine Datenverarbeitungsschaltung (220), die dazu eingerichtet ist, eine Heizleistung des Heizelements für die Babyflasche basierend auf eines Aufheiz- und Wärmeverlustverhaltens der mit einer Flüssigkeit gefüllten Babyflasche und einer, vorzugsweise einstellbaren, Zubereitungstemperatur für die Babynahrung zu bestimmen. In Fig. 8 ist ein beispielhaftes System der vorliegenden Erfindung gezeigt, wobei der Flaschenaufsatz (100) bereits mit der Babyflasche (805) und einem zugehörigen Babysauger mit Schutzkappe (810) verbunden ist.

Die Wärmestation (210) umfasst ferner eine Nutzerschnittstelle (225) zum Einstellen einer Materialeigenschaft der Babyflasche, optional zusätzlich einer Flüssigkeitsmenge, einer Nahrungspulvermenge und/oder einer Zubereitungstemperatur. Auch ist die Datenverarbeitungsschaltung dazu eingerichtet, die Heizleistung basierend auf den über die Nutzerschnittstelle eingestellten Werten für die Materialeigenschaft, optional zusätzlich die Flüssigkeitsmenge, die Nahrungspulvermenge und/oder die Zubereitungstemperatur, zu bestimmen, insbesondere unter Verwendung eines thermodynamischen Modells des Aufheiz- und Wärmeverlustverhaltens der Babyflasche oder unter Verwendung einer Vielzahl von vorkalibrierte Heizwerten oder Heizkurven für eine entsprechende Vielzahl von Kombinationen der einstellbaren Werte.

Die Wärmestation (210) kann ferner einen Temperatursensor (230) umfassen, der eine Temperatur der Babyflasche anzeigt (z.B. indirekt bzw. mittelbar über einen Messwert der Heizplatte), und wobei die Datenverarbeitungsschaltung dazu eingerichtet sein kann, die Heizleistung basierend auf der angezeigten Temperatur und einem Sollwert für die Temperatur der Babyflasche zu regeln (z.B. über einen Sollwert für die Heizplatte, der das Aufwärm- und Wärmeverlustverhalten einer darauf platzierten und befüllten Babyflasche berücksichtigt), wobei die Datenverarbeitungsschaltung, in einem ersten Betriebsmodus, die Heizleistung derart regelt, dass eine nicht erwärmte Babyflasche auf die Zubereitungstemperatur erhitzt wird, und in einem zweiten Betriebsmodus, die Heizleistung derart regelt, dass eine Temperatur einer auf die Zubereitungstemperatur erwärmte Babyflasche im Wesentlichen konstant gehalten wird (z.B. in einem Temperaturintervall von +- 2°C um die eingestellte Zubereitungstemperatur).

**Fig. 9** zeigt ein Flussdiagramm eines Verfahrens (900) zum Betrieb einer Wärmestation (210) zum Warmhalten und / oder Erwärmen einer mit Flüssigkeit gefüllten Babyflasche. Das Verfahren umfasst mehrere Schritte, die im Folgenden detailliert beschrieben werden. Ein erster Schritt des Verfahrens umfasst das Erhalten (910) von Eingabeparametern an einer Datenverarbeitungsschaltung (220) der Wärmestation (210). Diese Eingabeparameter sind über eine Nutzerschnittstelle (225) einzugeben und umfassen eine Materialeigenschaft der Babyflasche. Sie sind vorzugsweise mit einer Wärmekapazität der gefüllten Babyflasche assoziiert. Sie erlauben es, ein Aufheiz- und Wärmeverlustverhalten der gefüllten Babyflasche zu bestimmen oder abzuschätzen. Ein zweiter Schritt umfasst ist das Erhalten (920) einer Zubereitungstemperatur für die Babyflasche an der Datenverarbeitungsschaltung (220), ebenfalls über die Nutzerschnittstelle (225). Beispielsweise kann der Nutzer zwischen mehreren voreingestellten Zubereitungstemperaturen wählen oder die Temperatur auf einer °C-Skala einstellen. Ein dritter Schritt umfasst das Ansteuern (930) eines Heizelements (215) der Wärmestation basierend auf den erhaltenen Eingabeparametern und der Zubereitungstemperatur.

Das Verfahren umfasst ferner ein Bestimmen oder Abschätzen des Aufheiz- und Wärmeverlustverhaltens der Babyflasche basierend auf den erhaltenen Eingabeparametern sowie ein Ansteuern des Heizelements (215) basierend auf dem bestimmten Aufheiz- und Wärmeverlustverhalten der Babyflasche. Dies ermöglicht eine präzisere Steuerung der Heizleistung des Heizelements (215), um die gewünschte Zubereitungstemperatur zu erreichen und zu halten und stellt sicher, dass die Heizleistung optimal an die spezifischen Eigenschaften der befüllten Babyflasche (Material, Größe, Füllstand, Typ der Babynahrung etc.) angepasst werden kann.

In einigen Ausführungsbeispielen kann das Verfahren ferner ein Auswählen einer vorkalibrierten Heizleistung oder einer vorkalibrierten Heizkurve, insbesondere eines vorkalibrierten Sollwerts für eine Regelung der Heizleistung oder einer Kurve solcher Sollwerte, aus einer Vielzahl von in einem Datenspeicher (240) der Wärmestation abgespeicherten Heizleistungen oder Heizkurven bzw. der zugehörigen Regelungssollwerte umfassen. Diese Auswahl kann insbesondere auf den erhaltenen Eingabeparametern und der erhaltenen Zubereitungstemperatur basieren. Jede der vorkalibrierten Heizleistungen oder der vorkalibrierten Heizkurven kann insbesondere einer spezifischen Kombination von Eingabeparametern und Zubereitungstemperatur entsprechen. Damit lässt sich auf einfache Weise sicherstellen, dass die Wärmestation (210) zur Zubereitung unterschiedlicher Babynahrung in unterschiedlichen Flaschen und variabler Menge betrieben werden kann.

Beispielsweise kann ein Computerprogramm Anweisungen zum Ausführen der Schritte des vorstehend beschriebenen Verfahrens umfassen, wenn die Anweisungen von einer Datenverarbeitungsschaltung einer Wärmestation zum Warmhalten und / oder Erwärmen einer mit Flüssigkeit gefüllten Babyflasche ausgeführt werden - wie ebenfalls vorstehend beschrieben.

Weitere technische Vorteile des hier beschriebenen Verfahrens umfassen eine präzise und effiziente Erwärmung und Warmhaltung der Babyflasche, die Anpassungsfähigkeit an verschiedene Babyflaschen und Babynahrungszubereitungen sowie eine erhöhte Sicherheit und Benutzerfreundlichkeit durch die Verwendung vorkalibrierter Heizwerte und Heizkurven. Das Verfahren stellt sicher, dass die Babynahrung stets die optimale Temperatur hat, unabhängig von äußeren Einflüssen wie Änderungen der Raumtemperatur.

Das System aus dem hier beschriebenen Flaschenaufsatz und der hier beschriebenen Wärmestation ermöglicht es Babynahrung frisch, warm und schnell auch nachts zuzubereiten, ohne, dass hierfür neue Babyflaschen und / oder neue Babysauger angeschafft werden müssen.

## Patentansprüche

1. System (200) zur Zubereitung von warmer Babynahrung in Babyflaschen umfassend:
einen Flaschenaufsatz (100), umfassend:
einen unteren Teil (110) mit einem ersten Gewinde (115) zum Aufschrauben des Flaschenaufsatzes auf die Babyflasche;
einen mittleren Teil (120) zur Aufbewahrung einer Babynahrungszutat und mit einem Verschlusselement (125), mit dem die Babynahrungszutat in die Babyflasche zur Zubereitung der Babynahrung eingelassen werden kann; und
einen oberen Teil (130) mit einem zweiten Gewinde (135) zum Aufschrauben eines Babysaugers auf den Flaschenaufsatz,
wobei bei geöffnetem Verschlusselement die zubereitete Babynahrung von der Babyflasche durch den Flaschenaufsatz in den Babysauger fließen kann; und
eine Wärmestation (210), umfassend:
eine Nutzerschnittstelle (225) zum Einstellen einer Materialeigenschaft der Babyflasche, wobei die Wärmestation dazu eingerichtet ist, einer darauf stehenden Babyflasche durch Wärmeleitung über ein Bodenteil der Babyflasche Wärme zuführen, wenn die Babyflasche auf einer Heizplatte (212) der Wärmestation platziert ist;
ein Heizelement (215); und
eine Datenverarbeitungsschaltung (220), die dazu eingerichtet ist, eine Heizleistung des Heizelements für die Babyflasche basierend auf einem Aufheiz- und Wärmeverlustverhalten der mit einer Flüssigkeit gefüllten Babyflasche, einer Zubereitungstemperatur für die Babynahrung, und der über die Nutzerschnittstelle eingestellten Materialeigenschaft der Babyflasche zu bestimmen.

2. System nach Anspruch 1, wobei die Zubereitungstemperatur einstellbar ist.

3. System nach Anspruch 2, wobei die Datenverarbeitungsschaltung dazu eingerichtet ist, die Heizleistung unter Verwendung eines thermodynamischen Modells des Aufheiz- und Wärmeverlustverhaltens der Babyflasche oder unter Verwendung einer Vielzahl von vorkalibrierte Heizwerten oder Heizkurven für eine entsprechende Vielzahl von Kombinationen der einstellbaren Werte zu bestimmen.

4. System nacheinem der Ansprüche 1 bis 3, wobei die Wärmestation ferner einen Temperatursensor (230) umfasst, der eine Temperatur der Babyflasche zumindest mittelbar anzeigt, und wobei die Datenverarbeitungsschaltung dazu eingerichtet ist, die Heizleistung basierend auf der angezeigten Temperatur und einem Sollwert für die Temperatur der Babyflasche zu regeln.

5. System nach Anspruch 4, wobei die Datenverarbeitungsschaltung, in einem ersten Betriebsmodus, die Heizleistung derart regelt, dass eine nicht erwärmte Babyflasche auf die Zubereitungstemperatur erhitzt wird, und in einem zweiten Betriebsmodus, die Heizleistung derart regelt, dass eine Temperatur einer auf die Zubereitungstemperatur erwärmte Babyflasche im Wesentlichen konstant gehalten wird.

6. System nach einem der vorhergehenden Ansprüche 1 bis 5, wobei die Wärmestation ferner einen Flaschensensor (232) umfasst, der erkennt, ob sich eine Babyflasche auf der Heizplatte befindet, und wobei die Datenverarbeitungsschaltung die Regelung der Heizleistung unterbricht, wenn der Flaschensensor anzeigt, dass sich keine Babyflasche auf der Heizplatte befindet.

7. System nach einem der vorhergehenden Ansprüche 1 bis 6, wobei ein Durchmesser oder eine Breite der Wärmestation kleiner ist als 100 mm und wobei eine Höhe der Wärmestation kleiner ist als 30 mm.

8. System nach einem der vorhergehenden Ansprüche 1 bis 7, wobei das Verschlusselement eine Verschlussiris umfasst, die vorzugsweise im Wesentlichen aus Silikon gefertigt ist.

9. System nach einem der vorhergehenden Ansprüche 1 bis 8, wobei das erste Gewinde ein Innengewinde und das zweite Gewinde ein Außengewinde umfasst; und / oder
wobei das Verschlusselement über eine Drehung des mittleren Teils gegenüber dem unteren Teil des Flaschenaufsatzes, vorzugsweise reversibel, betätigbar ist.

10. Verfahren (900) zum Betrieb eines Systems nach einem der vorhergehenden Ansprüche 1 bis 9 zum Warmhalten und / oder Erwärmen einer mit Flüssigkeit gefüllten Babyflasche, umfassend:
Erhalten (910), an einer Datenverarbeitungsschaltung (220) der Wärmestation, von Eingabeparametern, über eine Nutzerschnittstelle (225), die mit einer Wärmekapazität der gefüllten Babyflasche assoziiert sind und es erlauben ein Aufheiz- und Wärmeverlustverhalten der Babyflasche zu bestimmen oder abzuschätzen, wobei die Eingabeparameter eine Materialeigenschaft der Babyflasche umfassen;
Erhalten (920), an der Datenverarbeitungsschaltung, einer Zubereitungstemperatur für die Babyflasche über die Nutzerschnittstelle (225);
Bestimmen oder Abschätzen des Aufheiz- und Wärmeverlustverhaltens der Babyflasche basierend auf den erhaltenen Eingabeparametern; und
Ansteuern des Heizelements basierend auf den erhaltenen Eingabeparametern, der Zubereitungstemperatur und dem bestimmten Aufheiz- und Wärmeverlustverhalten der Babyflasche.

11. Verfahren nach Anspruch 10, ferner umfassend:
Auswählen einer vorkalibrierten Heizleistung oder einer vorkalibrierten Heizkurve, insbesondere eines vorkalibrierten Sollwerts für eine Regelung der Heizleistung oder einer Kurve solcher Sollwerte, aus einer Vielzahl von in einem Datenspeicher (240) der Wärmestation abgespeicherten Heizleistungen oder Heizkurven bzw. der zugehörigen Regelungssollwerte, basierend auf den erhaltenen Eingabeparametern und der erhaltenen Zubereitungstemperatur,
wobei jede der vorkalibrierten Heizleistungen oder der vorkalibrierten Heizkurven einer spezifischen Kombination von Eingabeparametern und Zubereitungstemperatur entspricht.

12. System nach einem der vorhergehenden Ansprüche 1 bis 9, wobei die Wärmestation (210) umfasst:
ein Heizelement (215) zum Warmhalten und / oder Erwärmen der auf einer Heizplatte (212) der Wärmestation platzierten und mit Flüssigkeit gefüllten Babyflasche durch Erwärmen eines Bodenteils der Babyflasche;
einen Temperatursensor (230), der eine Temperatur der Babyflasche anzeigt;
eine Datenverarbeitungsschaltung (220), die eingerichtet ist, das Verfahren nach einem der vorhergehenden Ansprüche 10 bis 11 durchzuführen.

13. Computerprogramm, umfassend Anweisungen zum Ausführen der Schritte des Verfahrens eines der Ansprüche 10 bis 11, wenn die Anweisungen von einer Datenverarbeitungsschaltung einer Wärmestation eines Systems nach einem der vorhergehenden Ansprüche 1 bis 9 ausgeführt werden.

## Claims

1. System (200) for preparing warm baby food in baby bottles comprising:
a bottle cap (100) comprising:
a lower part (110) with a first thread (115) for screwing the bottle cap onto the baby bottle;
a middle part (120) for storing a baby food ingredient and with a closure element (125) with which the baby food ingredient can be introduced into the baby bottle for preparing the baby food; and
an upper part (130) with a second thread (135) for screwing a baby pacifier onto the bottle cap,
wherein, with closure element open, the prepared baby food can flow from the baby bottle through the bottle cap into the baby pacifier; and
a heating station (210) comprising:
a user interface (225) for setting a material property of the baby bottle, wherein the heating station is configured to supply heat to a baby bottle standing thereon by heat conduction via a bottom part of the baby bottle when the baby bottle is placed on a heating plate (212) of the heating station;
a heating element (215); and
a data processing circuit (220) configured to determine a heating power of the heating element for the baby bottle based on a heating and heat loss behaviour of the baby bottle filled with a liquid, a preparation temperature for the baby food, and the material property of the baby bottle set via the user interface.

2. System according to claim 1, wherein the preparation temperature is adjustable.

3. System according to claim 2, wherein the data processing circuit is configured to determine the heating power using a thermodynamic model of the heating and heat loss behaviour of the baby bottle or using a plurality of pre-calibrated heating values or heating curves for a corresponding plurality of combinations of the adjustable values.

4. System according to any one of claims 1 to 3, wherein the heating station further comprises a temperature sensor (230) at least indirectly indicating a temperature of the baby bottle, and wherein the data processing circuit is configured to control the heating power based on the indicated temperature and a set point for the temperature of the baby bottle.

5. System according to claim 4, wherein the data processing circuit, in a first operating mode, controls the heating power such that an unheated baby bottle is heated to the preparation temperature, and in a second operating mode, controls the heating power such that a temperature of a baby bottle heated to the preparation temperature is kept substantially constant.

6. System according to any one of the preceding claims 1 to 5, wherein the heating station further comprises a bottle sensor (232) detecting whether a baby bottle is located on the heating plate, and wherein the data processing circuit interrupts the control of the heating power when the bottle sensor indicates that no baby bottle is located on the heating plate.

7. System according to any one of the preceding claims 1 to 6, wherein a diameter or a width of the heating station is smaller than 100 mm and wherein a height of the heating station is smaller than 30 mm.

8. System according to any one of the preceding claims 1 to 7, wherein the closure element comprises a closure iris, which is preferably
substantially made of silicone.

9. System according to any one of the preceding claims 1 to 8, wherein the first thread comprises an internal thread and the second thread comprises an external thread; and/or
wherein the closure element can be actuated, preferably reversibly, via a rotation of the middle part relative to the lower part of the bottle cap.

10. Method (900) for operating a system according to any one of the preceding claims 1 to 9 for keeping warm and/or heating a baby bottle filled with liquid, comprising:
obtaining (910), at a data processing circuit (220) of the heating station, input parameters, via a user interface (225), which are associated with a heat capacity of the filled baby bottle and allow a heating and heat loss behaviour of the baby bottle to be determined or estimated, wherein the input parameters comprise a material property of the baby bottle;
obtaining (920), at the data processing circuit, a preparation temperature for the baby bottle via the user interface (225);
determining or estimating the heating and heat loss behaviour of the baby bottle based on the obtained input parameters; and
driving the heating element based on the obtained input parameters, the preparation temperature and the determined heating and heat loss behaviour of the baby bottle.

11. Method according to claim 10, further comprising:
selecting a pre-calibrated heating power or a pre-calibrated heating curve, in particular a pre-calibrated set point for a control of the heating power or a curve of such set points, from a plurality of heating powers or heating curves or the associated control set points stored in a data memory (240) of the heating station, based on the obtained input parameters and the obtained preparation temperature,
wherein each of the pre-calibrated heating powers or the pre-calibrated heating curves corresponds to a specific combination of input parameters and preparation temperature.

12. System according to any one of the preceding claims 1 to 9, wherein the heating station (210) comprises:
a heating element (215) for keeping warm and/or heating the baby bottle placed on a heating plate (212) of the heating station and filled with liquid by heating a bottom part of the baby bottle;
a temperature sensor (230) indicating a temperature of the baby bottle;
a data processing circuit (220) configured to perform the method according to any one of the preceding claims 10 to 11.

13. Computer program comprising instructions for executing the steps of the method of any one of claims 10 to 11 when the instructions are executed by a data processing circuit of a heating station of a system according to any one of the preceding claims 1 to 9.

## Revendications

1. Système (200) de préparation de nourriture chaude pour bébé dans des biberons, comprenant :
un embout de biberon (100) comprenant :
une partie inférieure (110) comportant un premier filetage (115) pour visser l'embout de biberon sur le biberon ;
une partie centrale (120) de stockage d'un ingrédient de nourriture pour bébé et dotée d'un élément d'obturation (125) permettant d'introduire l'ingrédient de nourriture pour bébé dans le biberon de préparation de nourriture pour bébé ; et
une partie supérieure (130) comportant un deuxième filetage (135) pour visser une tétine sur l'embout de biberon,
dans lequel, lorsque l'élément d'obturation est ouvert, la nourriture pour bébé préparée peut s'écouler du biberon dans la tétine à travers l'embout de biberon ; et
une station de chauffage (210) comprenant :
une interface utilisateur (225) pour régler une propriété de matériau du biberon, dans lequel la station de chauffage est configurée pour fournir de la chaleur à un biberon posé dessus par conduction thermique via une partie inférieure du biberon lorsque le biberon est placé sur une plaque chauffante (212) de la station de chauffage ;
un élément chauffant (215) ; et
un circuit de traitement de données (220) configuré pour déterminer une puissance de chauffe de l'élément chauffant pour le biberon sur la base d'un comportement de chauffe et de perte de chaleur du biberon rempli de liquide, d'une température de préparation de nourriture pour bébé, et de la propriété de matériau du biberon réglée via l'interface utilisateur.

2. Système selon la revendication 1, dans lequel la température de préparation est réglable.

3. Système selon la revendication 2, dans lequel le circuit de traitement de données est configuré pour déterminer la puissance de chauffe à l'aide d'un modèle thermodynamique du comportement de chauffe et de perte de chaleur du biberon ou à l'aide d'une pluralité de valeurs de chauffage ou de courbes de chauffe préétalonnées pour une pluralité correspondante de combinaisons de valeurs réglables.

4. Système selon l'une des revendications 1 à 3, dans lequel la station de chauffage comprend en outre un capteur de température (230) indiquant au moins indirectement une température du biberon, et dans lequel le circuit de traitement de données est configuré pour réguler la puissance de chauffe sur la base de la température affichée et d'une valeur de consigne de température du biberon.

5. Système selon la revendication 4, dans lequel le circuit de traitement de données, dans un premier mode de fonctionnement, régule la puissance de chauffe de sorte qu'un biberon non chauffé est chauffé à la température de préparation et, dans un deuxième mode de fonctionnement, régule la puissance de chauffe de manière à maintenir sensiblement constante une température d'un biberon chauffé à la température de préparation.

6. Système selon l'une des revendications 1 à 5 précédentes, dans lequel la station de chauffage comprend en outre un capteur de biberon (232) qui détecte si un biberon est sur la plaque chauffante, et dans lequel le circuit de traitement de données interrompt la régulation de la puissance de chauffe lorsque le capteur de biberon indique qu'aucun biberon n'est sur la plaque chauffante.

7. Système selon l'une des revendications 1 à 6 précédentes, dans lequel un diamètre ou une largeur de la station de chauffage est inférieur(e) à 100 mm et dans lequel une hauteur de la station de chauffage est inférieure à 30 mm.

8. Système selon l'une des revendications 1 à 7 précédentes, dans lequel l'élément d'obturation comprend un iris d'obturation de préférence réalisé sensiblement en silicone.

9. Système selon l'une des revendications 1 à 8 précédentes, dans lequel le premier filetage comprend un filetage intérieur et le deuxième filetage un filetage extérieur ; et/ou dans lequel l'élément d'obturation est actionnable via une rotation de la partie centrale par rapport à la partie inférieure de l'embout de biberon, de préférence réversible.

10. Procédé (900) de fonctionnement d'un système selon l'une des revendications 1 à 9 précédentes pour maintenir au chaud et/ou chauffer un biberon rempli de liquide, comprenant :
la réception (910), sur un circuit de traitement de données (220) de la station de chauffage, de paramètres d'entrée, via une interface utilisateur (225), associés à une capacité thermique du biberon rempli et permettant de déterminer ou d'estimer un comportement de chauffe et de perte de chaleur du biberon, dans lequel les paramètres d'entrée comprennent une propriété de matériau du biberon ;
l'obtention (920), au niveau du circuit de traitement de données, d'une température de préparation pour le biberon via l'interface utilisateur (225) ;
la détermination ou l'estimation du comportement de chauffe et de perte de chaleur du biberon sur la base des paramètres d'entrée obtenus ; et
la commande de l'élément chauffant sur la base des paramètres d'entrée reçus, de la température de préparation et du comportement déterminé de chauffage et de perte de chaleur du biberon.

11. Procédé selon la revendication 10, comprenant en outre :
la sélection d'une puissance de chauffe précalibrée ou d'une courbe de chauffe précalibrée, en particulier d'une valeur de consigne précalibrée pour une régulation de la puissance de chauffe ou d'une courbe de telles valeurs de consigne, parmi une pluralité de puissances de chauffe ou de courbes de chauffage stockées dans une mémoire de données (240) de la station de chauffe ou des valeurs de consigne de régulation associées, sur la base des paramètres d'entrée reçus et de la température de préparation reçue,
dans lequel chacune des puissances de chauffe préétalonnées ou des courbes de chauffe préétalonnées correspond à une combinaison spécifique de paramètres d'entrée et de température de préparation.

12. Système selon l'une des revendications 1 à 9 précédentes, dans lequel la station de chauffage (210) comprend :
un élément chauffant (215) pour maintenir au chaud et/ou chauffer le biberon placé sur une plaque chauffante (212) de la station de chauffage et rempli de liquide en chauffant une partie inférieure du biberon ;
un capteur de température (230) indiquant une température du biberon ;
un circuit de traitement de données (220) configuré pour réaliser le procédé selon l'une des revendications précédentes 10 et 11.

13. Programme informatique comprenant des instructions pour exécuter les étapes du procédé selon l'une des revendications 10 et 11, lorsque les instructions sont exécutées par un circuit de traitement de données d'une station de chauffage d'un système selon l'une des revendications 1 à 9 précédentes.
